# EUROPEAN PATENT APPLICATION

(11) **EP 3 991 835 A1**
(43) Date of publication of application: **04.05.2022**
(21) Application number: 19935432.5
(22) Date of filing: 27.06.2019
(51) Int. Cl.: B01J 20/29, B01D 15/38, B01D 15/40, B01J 20/285, C11C 3/00, G01N 30/02, G01N 30/26, G01N 30/72, G01N 30/88

(54) **TRIGLYCERIDE ANALYSIS METHOD, OIL AND FAT SORTING METHOD, AND TRIGLYCERIDE PRODUCTION METHOD**

(71) Applicant: The Nisshin OilliO Group, Ltd., Tokyo 104-8285 (JP)
(72) Inventor: MASUDA Koji, Yokohama-shi, Kanagawa 235-8558 (JP); HASEGAWA Yuusuke, Yokohama-shi, Kanagawa 235-8558 (JP); MURANO Yoshihiro, Yokohama-shi, Kanagawa 235-8558 (JP)
(74) Representative: Winter, Brandl - Partnerschaft mbB
(86) International application number: PCT/JP2019/025698
(87) International publication number: WO 2020/261505

(57) **Abstract**

An object of the present invention is to provide a method for analyzing triglyceride using supercritical fluid chromatography, a method for quantifying triglyceride by supercritical fluid chromatography and sorting oils and fats based on triglyceride components, and a method for producing triglyceride in which triglyceride can be fractionated. The present invention is a method for analyzing triglyceride by supercritical fluid chromatography, in which a stationary phase having a chiral selector and a mobile phase containing carbon dioxide and methanol are used in the supercritical fluid chromatography, the chiral selector is a chiral selector in which a substituent having one chlorine and one methyl group is bound to a polysaccharide and/or a chiral selector in which a substituent having two or more chlorines is bound to a polysaccharide.

## Description

### TECHNICAL FIELD

The present invention relates to a method for analyzing triglyceride, a method for sorting oils and fats, and a method for producing triglyceride.

### BACKGROUND ART

Triglyceride, which is a constituent of oils and fats, is tri-ester of glycerin and fatty acid. The composition of triglyceride is considered to affect physical properties or nutrition. Therefore, the composition of triglyceride is necessary to be controlled in a process of producing and selling oils and fats. Generally, the composition of triglyceride has been analyzed using gas chromatography or liquid chromatography. However, traditional gas chromatography or liquid chromatography methods are time-consuming, and have had difficulty in separating even triglyceride having different constituent fatty acids and an identical total carbon number.

Meanwhile, although supercritical fluid chromatography is performed in the same system as high performance liquid chromatography, it has been considered that the ability of separation (clearly distinguished from peaks of other substances) and detection (high sensitivity is obtained by a sharp peak) is better than that of high performance liquid chromatography known to the inventors due to the feature that the supercritical fluid has low viscosity and high diffusibility. Thus, supercritical fluid chromatography has been used for analysis of partial polyol polyesters (Patent Literature 1).

### CITATION LIST

### PATENT LITERATURE

Patent Literature 1: JP-T-6-500783

### SUMMARY OF THE INVENTION

### PROBLEMS TO BE SOLVED BY THE INVENTION

However, although supercritical fluid chromatography has a short processing time and improved accuracy, there is still no suitable method for separating triglyceride and/or an isomer of triglyceride, having an identical total carbon number and different constituent fatty acids.

The present invention has been made in view of the above circumstances, and an object of the present invention is to provide a method for analyzing triglyceride using supercritical fluid chromatography. Another object of the present invention is to provide a method including quantifying triglyceride by supercritical fluid chromatography and sorting oils and fats based on triglyceride components. Still another object of the present invention is to provide a method for producing triglyceride in which triglyceride can be fractionated.

### SOLUTION TO THE PROBLEMS

As a result of intensive studies to solve the above problems, the present inventors have found that triglyceride having an identical total carbon number can be analyzed rapidly with high accuracy by analyzing triglyceride by supercritical fluid chromatography under specific conditions. Further, the present inventors have found that an optical isomer can also be analyzed. From these findings, the present inventors have completed the present invention.

That is, the present invention relates to the followings.
[1] A method for analyzing triglyceride by supercritical fluid chromatography, in which a stationary phase having a chiral selector and a mobile phase containing carbon dioxide and methanol are used in the supercritical fluid chromatography, the chiral selector is a chiral selector in which a substituent having one chlorine and one methyl group is bound to a polysaccharide and/or a chiral selector in which a substituent having two or more chlorines is bound to a polysaccharide.
[2] The analysis method according to [1], in which the substituent having one chlorine and one methyl group and/or the substituent having two or more chlorines is a substituent of a phenylcarbamate derivative.
[3] The analysis method according to [1] or [2], in which a mass spectrometer is used as a detector in the supercritical fluid chromatography.
[4] The analysis method according to any one of [1] to [3], in which the mobile phase contains 60 to 95 vol% of carbon dioxide and 40 to 5 vol% of methanol in the mobile phase.
[5] The analysis method according to any one of [1] to [4], in which the chiral selector is amylose tris(3-chloro-4-methylphenylcarbamate) and/or amylose tris(3,5-dichlorophenylcarbamate).
[6] The analysis method according to any one of [1] to [5], in which triglyceride and/or an isomer of triglyceride having different constituent fatty acids and an identical total carbon number is analyzed.
[7] A method for sorting oils and fats, including quantifying oils and fats in accordance with the method according to any one of [1] to [6], in which the oils and fats are sorted based on quantified triglyceride components.
[8] A method for producing triglyceride, including fractionating triglyceride by supercritical fluid chromatography, in which a stationary phase having a chiral selector and a mobile phase containing carbon dioxide and methanol are used in the supercritical fluid chromatography, and the chiral selector is a chiral selector in which a substituent having one chlorine and one methyl group is bound to a polysaccharide and/or a chiral selector in which a substituent having two or more chlorines is bound to a polysaccharide.

### EFFECTS OF THE INVENTION

As shown in Examples to be described later, according to the present invention, triglyceride having different constituent fatty acids and an identical total carbon number, a positional isomer of triglyceride, and an optical isomer of triglyceride can be rapidly separated, so that the triglyceride, the positional isomer of triglyceride, and the optical isomer of triglyceride can be measured and fractionated. Further, oils and fats can be sorted by using the method of the present invention.

### BRIEF DESCRIPTION OF THE DRAWINGS

Fig. 1 is a chromatogram (chart) of Example 1.
Fig. 2 is a chromatogram (chart) of Comparative Example 5.

### DESCRIPTION OF THE EMBODIMENTS

The term "triglyceride" is a tri-ester of glycerin and fatty acid. The fatty acid may be a linear or branched fatty acid having 6 to 24 carbon atoms. Further, the fatty acid may be either a saturated fatty acid or an unsaturated fatty acid. Preferably, the fatty acid is a linear saturated fatty acid and/or a linear unsaturated fatty acid, having 8 to 22 carbon atoms. These fatty acids are not particularly limited, and usable examples thereof include caprylic acid, capric acid, lauric acid, myristic acid, palmitic acid, stearic acid, behenic acid, palmitoleic acid, oleic acid, linoleic acid, linolenic acid, erucic acid, arachidonic acid, DHA, and EPA.

In the present invention, triglyceride and/or an isomer of triglyceride, having different constituent fatty acids and an identical total carbon number, can be analyzed or fractionated by supercritical fluid chromatography. The triglyceride having different constituent fatty acids and an identical total carbon number is triglyceride in which three fatty acids constituting the triglyceride differ, and the total carbon numbers of the three fatty acids are identical. In the case of separation between triglycerides in which three fatty acids constituting the triglyceride are saturated fatty acids and the total carbon numbers are identical, separation is difficult by a method known to the inventors. However, good separation is achieved by the present invention, which is preferable. Further, the isomer of triglyceride is a positional isomer of triglyceride in which the fatty acids at positions 1 and 2 are reversed, and/or a racemic body in which the carbon at position 2 is the optical center. Hence, in the present invention, it is possible to separate an isomer of triglyceride in which different fatty acids are ester-bonded to three carbons of glycerin, respectively and an isomer of triglyceride in which two different fatty acids are ester-bonded to three carbons of glycerin. For example, in a case where two myristic acids and one stearic acid are bound to glycerin, 1,2-dimyristoyl-3-stearoyl-*sn*-glycerol (hereinafter, abbreviated as "MMS") and 1-stearoyl-2,3-dimyristoyl-*sn*-glycerol (hereinafter, abbreviated as "SMM") are present as enantiomers, and 1,3-dimyristoyl-2-stearoyl-glycerol (hereinafter, abbreviated as "MSM") is present as a positional isomer. The total carbon number of triglycerides of MMS, SMM, and MSM is 49. Further, for example, 1,3-dipalmitoyl-2-myristoyl-glycerol (hereinafter, abbreviated as "PMP") or the like is present as triglyceride having different constituent fatty acids and an identical total carbon number. In the present invention, these triglycerides can be separated and analyzed.

The "oils and fats" are not particularly limited, and examples of oils and fats include vegetable oils and fats and animal oils and fats, and vegetable oils and fats are preferable.

Examples of vegetable oils and fats include canola oil, palm oil, and a transesterified oil thereof, and a transesterified oil is preferable.

As the oils and fats, edible oils and fats are preferable.

The present embodiment is not particularly limited, and glyceride of a naturally-derived animal or vegetable oil or a synthetic oil can be used for analysis.

### <Method for Analyzing Triglyceride>

The method for analyzing triglyceride in the present embodiment includes analyzing an isomer of triglyceride by supercritical fluid chromatography.

Here, the "supercritical fluid chromatography" is a type of column chromatography also called SFC, and refers to one that uses a supercritical fluid as the mobile phase. In the supercritical fluid chromatography, with the use of a subcritical fluid or supercritical fluid that has characteristics of low viscosity and high diffusibility as the mobile phase, the resolution and detectability can be improved as compared with those in liquid chromatography (HPLC) that uses a liquid as the mobile phase.

As the "mobile phase" of supercritical fluid chromatography, for example, carbon dioxide in a liquefied state, a subcritical state, or a supercritical state is used, and in addition to this, it is preferable to use an organic solvent (modifier) in combination. As the modifier, it is necessary to contain methanol. Preferably, the volume ratio of carbon dioxide : methanol is in a range of 1 : 1.3 to 1 : 1. The volume ratio of carbon dioxide: methanol is more preferably in a range of 1 : 1.4 to 5.5 : 4.5, and still more preferably in a range of 85 : 15 to 7 : 3. Other solvents may be contained as long as the content of other solvents is in a range of 10 vol% of the mobile phase. More preferably, the content of other solvents is in a range of 5 vol% or less of the mobile phase. The other solvents are not particularly limited, and an organic solvent such as ethanol, isopropanol, acetonitrile, or dichloromethane can be used.

As the "stationary phase" of the supercritical fluid chromatography, a chiral selector in which a substituent having one chlorine and one methyl group is bound to a polysaccharide and/or a chiral selector in which a substituent having two or more chlorines is bound to a polysaccharide is used. For example, a stationary phase in which an amylose derivative or cellulose derivative as a chiral selector is immobilized or coated on silica gel as a substrate can be used. Further, as for the chiral selector, a substituent having one chlorine and one methyl group and/or a substituent having two chlorines is preferably a substituent of a phenylcarbamate derivative. Examples of these substituents include a chloromethylphenylcarbamate group and a dichlorophenylcarbamate group. A 3-chloro-4-methylphenylcarbamate group or a 3,5-dichlorophenylcarbamate group is preferable. Further, it is preferable that three of these substituents are bound to the sugar unit of the polysaccharide. The polysaccharide is preferably amylose. The chiral selector is more preferably amylose tris(3-chloro-4-methylphenylcarbamate) and/or amylose tris(3,5-dichlorophenylcarbamate).

In the present embodiment, the stationary phase can be used by packing a single column or separate columns with the stationary phase. Usually, a column packed with a single stationary phase is commercially available. Accordingly, the column packed with the stationary phase can be used alone, or the columns can be connected in series or in parallel for use.

In the present embodiment, a stationary phase and a column other than those described above may be additionally used. In that case, it is preferable that a stationary phase and a column other than those described above is connected in series with the column of the stationary phase having a chiral selector in which a substituent having one chlorine and one methyl group is bound to a polysaccharide and/or a chiral selector in which a substituent having two or more chlorines is bound to a polysaccharide.

The "detector" of the supercritical fluid chromatography is not particularly limited, and, for example, an ultraviolet-visible absorbance detector, a diode array detector, a mass spectrometer, a circular dichroism detector, or the like can be used. Particularly, a mass spectrometer that can perform analysis under MRM conditions is preferable in terms of detecting various triglycerides.

As the conditions of the supercritical fluid chromatography, conditions used for the analysis of oils and fats can be adopted without any particular limitation.

In the case of a composition containing a component other than oils and fats, prior to the supercritical fluid chromatography, it is preferable to perform pretreatment such as extraction.

For example, the extraction is not particularly limited to this, and the use of an organic solvent that is hardly soluble in water (e.g., ether, hexane, heptane, octane, petroleum ether, benzene, toluene, xylene, or dichloromethane) allows for extraction of a component soluble in an organic solvent. Thereafter, it is preferable to use an organic solvent having a boiling point of 100°C or less so that the extracted component can be concentrated.

Further, in a case where there are alkalis/acids in the organic phase after the extraction, water washing may be performed in order to remove such alkalis/acids.

The extract can be concentrated as appropriate. The concentration method is not particularly limited, and examples of the concentration method include a method in which the extract is dried with a desiccant such as anhydrous sodium sulfate, calcium chloride, or a molecular sieve, and then the organic solvent is distilled.

In the present embodiment, various types of triglycerides contained in oils and fats can be analyzed. The analysis allows for confirmation of the presence or absence of triglyceride and/or an isomer of triglyceride having different constituent fatty acids and an identical total carbon number in a sample. Examples of the isomer of triglyceride include an optical isomer of triglyceride and a positional isomer of triglyceride. Further, it is possible to usually quantify triglyceride and/or an isomer of triglyceride, having different constituent fatty acids and an identical total carbon number, in a sample by a method using an external standard or internal standard, which is performed in quantitative analysis.

Examples of the triglyceride include triglyceride that has a fatty acid having 6 to 24 carbon atoms as the constituent fatty acid of triglyceride. As the fatty acid having 6 to 24 carbon atoms, a saturated and/or unsaturated linear fatty acid is preferable, and caproic acid, caprylic acid, capric acid, lauric acid, myristic acid, palmitic acid, palmitoleic acid, stearic acid, linoleic acid, linolenic acid, behenic acid, arachidonic acid, erucic acid, DHA, EPA, or the like is more preferable. A saturated linear fatty acid is still more preferable. Triglyceride having fatty acids selected from caproic acid, caprylic acid, capric acid, lauric acid, myristic acid, palmitic acid, stearic acid, and behenic acid as constituent fatty acids are most preferable.

### <Method for Sorting Oils and Fats>

The method for sorting oils and fats of the present invention includes quantifying oils and fats in accordance with <Method for Analyzing Triglyceride> described above, in which the oils and fats are sorted based on quantified triglyceride components.

In the present invention, the quantifying is not particularly limited. In the case of a transesterified oil, the quantifying may be performed after transesterification, and may be performed before the purification or in the course of the purification.

As the oils and fats, in addition to animal and vegetable oils, a transesterified oil obtained by regioselectively transesterifying the animal and vegetable oil can be used.

### <Method for Producing Triglyceride>

The method for producing triglyceride of the present embodiment includes fractionating an isomer of triglyceride by supercritical fluid chromatography. In the supercritical fluid chromatography, the stationary phase has a chiral selector in which a substituent having one chlorine and one methyl group is bound to a polysaccharide and/or a different chiral selector in which a substituent having two or more chlorines is bonded to a polysaccharide. Triglyceride is fractionated by supercritical fluid chromatography in fraction having a peak of each triglyceride. The fractionated fraction is washed with water and dried, if necessary. In a case where a solvent is used, the solvent is distilled off. The conditions and the like of the supercritical fluid chromatography are as described in detail in the above <Method for Analyzing Triglyceride>.

### EXAMPLES

Hereinafter, the present invention will be described in more detail with reference to Examples, but the present invention is not limited thereto.

### [Example 1]: Analysis of Triglyceride

### (Sample preparation)

Standard substance: 100 ppm by mass of a mixture of 1,2-dimyristoyl-3-stearoyl-*sn*-glycerol (MMS) and 1-stearoyl-2,3-dimyristoyl-*sn*-glycerol (SMM) (*rac-*MMS: trade name "1,2-Myristin-3-Stearin", manufactured by Larodan), 100 ppm by mass of 1,3-dipalmitoyl-2-myristoyl-glycerol (PMP: trade name "1,3-Palmitin-2-Myristin", manufactured by Larodan), and 100 ppm by mass of a mixture of 1,2-distearoyl-3-decanoyl-*sn*-glycerol (SSCa) and 1-decanoyl-2,3-distearoyl-*sn*-glycerol (CaSS) (*rac*-SSCa: trade name "1,2-Stearin-3-Decanoin", manufactured by Larodan) were used as chloroform solutions. The three kinds of solutions were mixed in equal amounts (mass), and the mixture was diluted with isopropanol so that *rac*-MMS, PMP, and *rac*-SSCa were each 10 ppm by mass, and an analysis sample A was obtained.

### (Supercritical fluid chromatography operation)

The analysis sample A was supplied to a supercritical fluid chromatography device under the following conditions. As the column, any one of Column (1), Column (2), and Column (3) was used, and as the mobile phase, a modifier was injected into a supercritical fluid CO₂. The modifier was injected under Condition A or Condition B. The chromatograms (charts) of the product ions at *m*/*z* 551.50, 523.45, 495.45, and 607.50 were compared by a mass spectrometer, and whether or not the product ions were separable was compared. Note that evaluation symbols mean as follows:
Excellent: Separation was achieved;
Good: Sensitivity was poor, but separation was achieved; and
Poor: Separation was not achieved, or any peak was not detected.

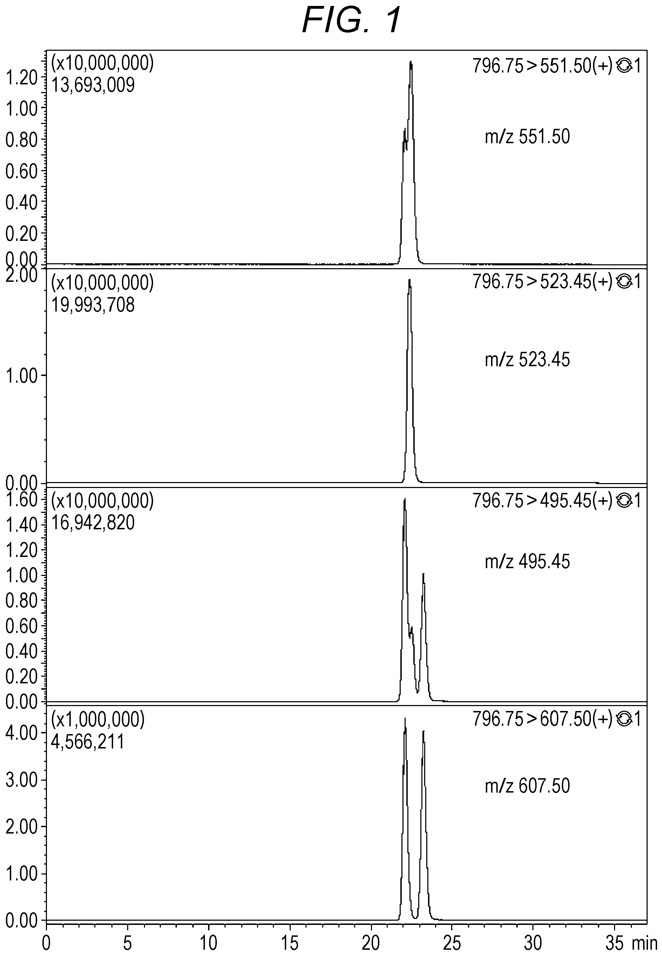

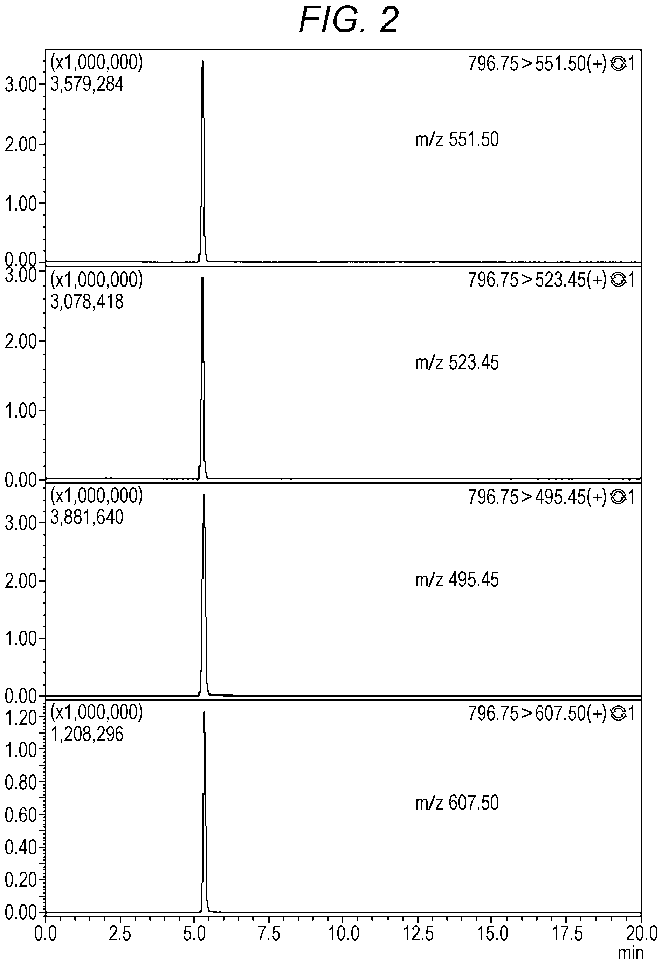

Analysis conditions and results are shown in Table 3. Fig. 1 shows the analysis result of Example 1 (chromatogram (chart) for each product ion), and Fig. 2 shows the analysis result of Comparative Example 5 (chromatogram (chart) for each product ion).

### (Supercritical fluid chromatography conditions)

### Supercritical fluid chromatography device: Nexera UC (manufactured by Shimadzu Corporation)

Column (1): CHIRALPAK IF-3, length 250 mm × inner diameter 4.6 mm, and particle diameter 3 µm (Amylose tris(3-chloro-4-methylphenylcarbamate) immobilized to silica gel), manufactured by Daicel Corporation
Column (2): Shim-pack UC-GISII, length 150 mm × inner diameter 2.1 mm, and particle diameter 3 µm, (octadecyl group), manufactured by Shimadzu Corporation
Column (3): CHIRALPAK ID-3, length 250 mm × inner diameter 4.6 mm, and particle diameter 3 µm (Amylose tris(3-chlorophenylcarbamate) immobilized to silica gel), manufactured by Daicel Corporation
Mobile phase: supercritical fluid CO₂ (flow rate: 1.1 mL/min)
Modifier: solvents of Table 1 (flow rate: 0.055 mL/min to 0.44 mL/min) and methanol containing 0.1% ammonium formate (flow rate: 0.1 mL/min)
^{∗}Condition A: CO₂: solvents in Table 1 (volume ratio = 85 : 15)
^{∗}Condition B: CO₂: gradient of solvents in Table 1 (volume ratio = 95 : 5 to 60 : 40)
Detector: tandem quadrupole MS
Injection volume: 1 µL

**[Table 1]**

| Solvent type | Composition ratio (%) | | | | | |
|---|---|---|---|---|---|---|
| | 1 | 2 | 3 | 4 | 5 | 6 |
| Methanol | 100 | 20 | | | | 50 |
| Acetonitrile | | 80 | 100 | | | |
| IPA | | | | 100 | | |
| Ethanol | | | | | 100 | 50 |

### (Mass Spectrometry Conditions)

Mass spectrometer: liquid chromatograph mass spectrometer LCMS-8050 (manufactured by Shimadzu Corporation)
Ionization mode: ESI (electrospray ionization)
Interface temperature: 300°C
Heating gas flow rate: 10 L/min
Nebulizer gas flow rate: 3 L/min
Desolvation gas temperature: 250°C
Heat block temperature: 400°C
Dry in gas flow rate: 10 L/min
Data collection mode: MRM (multiple reaction monitoring) conditions in Table 2

**[Table 2]**

| MRM conditions | Precursor ion [M + NH₄]⁺ | Product ion |
|---|---|---|
| 1 | *m*/*z* 796.75 | *m*/*z* 551.50 |
| 2 | *m*/*z* 796.75 | *m*/*z* 523.45 |
| 3 | *m*/*z* 796.75 | *m*/*z* 495.45 |
| 4 | *m*/*z* 796.75 | *m*/*z* 607.50 |

Note that peaks of product ions derived from PMP, MMS, and SMM can be detected at *m*/*z* 551.5, a peak of a product ion derived from PMP can be detected at *m*/*z* 523.45, peaks of product ions derived from MMS, SMM, SSCa, and CaSS can be detected at *m*/*z* 495.45, and peaks of product ions derived from SSCa and CaSS can be detected at *m*/*z* 607.50.

**[Table 3]**

| | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|
| Column | Column (1) | Column (1) | Column (1) | Column (1) | Column (1) | Column (1) | Column (1) | Column (2) | Column (3) |
| Solvents in Table 2 | 1 | | 2 | 3 | 4 | 5 | 6 | 1 | |
| Analysis conditions | A | B | | | | | | | |
| Separation | Excellent | Excellent | Good | Poor | Poor | Poor | Poor | Poor | Poor |

As shown in Example 1 (Fig. 1), a peak of a product ion derived from PMP and product ions derived from MMS and SMM can be detected as peaks at *m*/*z* 551.5, and the total content of PMP, MMS, and SMM can be measured. Since only a peak of a product ion derived from PMP can be detected at *m*/*z* 523.45, the MMS amount can be measured more accurately by combining with *m*/*z* 551.5. Peaks of product ions derived from MMS and SMM, a peak of a product ion derived from SSCa, and a peak of a product ion derived from CaSS are detected at *m*/*z* 495.45, and the total of MMS and SMM and the contents of SSCa and CaSS can be measured. A peak of a product ion derived from SSCa and a peak of a product ion derived from CaSS are detected at *m*/*z* 607.50, and the contents of SSCa and CaSS can be measured. In the calculation for the content, the content can be calculated by preparing a calibration curve using the standard substance used in this example as an external standard. From the above, it is found that, according to the present invention, it is possible to rapidly separate triglyceride, a positional isomer of triglyceride, and an optical isomer of triglyceride, having an identical total carbon number and different constituent fatty acids.

Similarly, in Examples 2 and 3, each triglyceride was separable.

### INDUSTRIAL APPLICABILITY

The present invention can be utilized in the field of oils and fats.

## Claims

1. A method for analyzing triglyceride by supercritical fluid chromatography, wherein
a stationary phase having a chiral selector and a mobile phase containing carbon dioxide and methanol are used in the supercritical fluid chromatography, and
the chiral selector is a chiral selector in which a substituent having one chlorine and one methyl group is bound to a polysaccharide and/or a chiral selector in which a substituent having two or more chlorines is bound to a polysaccharide.

2. The analysis method according to claim 1, wherein
the substituent having one chlorine and one methyl group and/or the substituent having two or more chlorines is a substituent of a phenylcarbamate derivative.

3. The analysis method according to claim 1 or 2, wherein
a mass spectrometer is used as a detector in the supercritical fluid chromatography.

4. The analysis method according to any one of claims 1 to 3, wherein
the mobile phase contains 60 to 95 vol% of carbon dioxide and 40 to 5 vol% of methanol in the mobile phase.

5. The analysis method according to any one of claims 1 to 4, wherein
the chiral selector is amylose tris(3-chloro-4-methylphenylcarbamate) and/or amylose tris(3,5-dichlorophenylcarbamate).

6. The analysis method according to any one of claims 1 to 5, wherein triglyceride and/or an isomer of triglyceride, having different constituent fatty acids and an identical total carbon number, is analyzed.

7. A method for sorting oils and fats, comprising
quantifying oils and fats in accordance with the method according to any one of claims 1 to 6, wherein
the oils and fats are sorted based on quantified triglyceride components.

8. A method for producing triglyceride, comprising
fractionating triglyceride by supercritical fluid chromatography, wherein
a stationary phase having a chiral selector and a mobile phase containing carbon dioxide and methanol are used in the supercritical fluid chromatography, and
the chiral selector is a chiral selector in which a substituent having one chlorine and one methyl group is bound to a polysaccharide and/or a chiral selector in which a substituent having two or more chlorines is bound to a polysaccharide.
